# EUROPEAN PATENT SPECIFICATION

(11) **EP 4 524 040 B1**
(45) Date of publication and mention of the grant of the patent: **01.07.2026**
(21) Application number: 23197948.5
(22) Date of filing: 18.09.2023
(51) Int. Cl.: B64G 1/40

(54) **TOROIDAL TANK AND SPACE VEHICLE**
TOROIDALER TANK UND RAUMFAHRZEUG
RÉSERVOIR TOROIDAL ET VÉHICULE SPATIAL

(43) Date of publication of application: 19.03.2025
(73) Proprietor: ArianeGroup GmbH, 82024 Taufkirchen (DE)
(72) Inventor: Arturs, Jasjukevics, 28199 Bremen (DE); Vosgerau, Bernd, 28199 Bremen (DE); Steinbeiß, Robert, 28199 Bremen (DE)
(74) Representative: Marschall, Stefan

(56) References cited:
- EP-A2- 0 138 120
- US-A- 5 305 970
- US-B2- 10 940 961
- US-B2- 7 568 352

## Description

The present invention refers to a toroidal tank for a vehicle according to the preamble of claim 1 and to a vehicle such as a spacecraft.

Toroidal tanks for vehicles such as spacecrafts for storage of one propellant, a pressurised fluid, etc. are well known. Also known are toroidal tanks for spacecraft which have two compartments for storing two different propellants (fluids). Such toroidal tank comprises an outer wall and an inner wall. The outer wall delimits an interior of the tank against an environment and the inner wall separates the interior of the tank in a radial inner compartment for receiving a first fluid and a radial outer compartment for receiving a second fluid. Such known toroidal tanks can be adapted for load bearing functions of the vehicle (see e.g. document US 7 568 352 B2).

It is an object of the invention to provide a toroidal tank for a vehicle which is adapted for load bearing and receiving a further fluid function, and a vehicle having an optimised load distribution.

This object is solved by a toroidal tank with the features of claim 1 and by a spacecraft with the features of claim 6. Advantageous embodiments are disclosed in the dependent claims, the description and the figures.

According to the invention, a toroidal tank for a vehicle comprises an outer wall and at least one inner wall. The outer wall, its shell, delimits an interior of the tank against an environment. The at least one inner wall separates the interior of the tank in at least one radial inner ring shaped compartment for receiving (storing) a fluid and in at least one radial outer ring shaped compartment for receiving (storing) a fluid. Further on, the at least one inner wall is adapted to be a part of a load bearing primary structure of the vehicle.

An exemplary vehicle is a spacecraft, a launcher stage such as a kick stage or an upper stage.

Due to the inventive integration of the toroidal tank in the primary structure, the load distribution can be optimised. Further on, a compact configuration regarding weight, height and width as well as minimising the structural index is realised. Thus, advantages of the inventive toroidal tank are at least low mass, low profile /dimension and a low cost of the overall system.

Preferably, the at least one inner wall is in mechanical connection with an upper adapter element and with a lower adapter element which are positioned outside on the outer wall. The adapter elements are interfaces which allow an attachment of a payload, for instance, and/or an attachment of the toroidal tank to a launch adapter.

The mechanical stability is enhanced, if each adapter element has a ring-like shape and is in axial direction aligned with the at least one inner wall.

The at least one inner wall is a hollow body defining an internal compartment adapted to receive a fluid. This configuration enables the toroidal tank to store not only two fluids (propellants), but at least three fluids (two propellants and a pressurant gas, for instance).

In order to position equipment of the vehicle, for instance electronical parts such as accumulators, solar panels, and/or thrusters, in particular for steering purposes first receiving elements can be provided which extend radially outwards from the adapter elements to which they are connected and which are adapted to receive (carry) equipment of the vehicle. Preferably, the first receiving elements are distributed in circumferential direction of the toroidal tank in constant distances. In one embodiment, eight first receiving elements are provided. However, a different number of receiving elements such as six or ten is also possible. The first receiving elements can be radial panels, which follow a contour of the outer wall between the adapter elements. In addition, the radial panels can be attached to the contour of the outer wall by lugs, for instance.

In addition to the first receiving elements, second receiving elements are provided which extend radially inwards from at least one of the adapter elements to which they are connected and which are adapted to receive (carry) equipment of the vehicle. Such second receiving elements are distributed evenly and are angled arms, for instance. The space they provide in the middle of the toroidal tank can be used to position the equipment also and/or to carry further equipment, for instance a further fluid tank.

An inventive vehicle such as a launcher stage for a spacecraft comprises an inventive toroidal tank. At least one inner wall of the toroidal tank separates the tank internally in at least one radial inner compartment for receiving (storing) a fluid and in at least one radial outer compartment for receiving (storing) a fluid. The at least one inner wall is connected to a load bearing primary structure of the vehicle and thus integrated in a load path of the vehicle.

Such vehicle shows an optimised load distribution as a load path has not to be directed around the toroidal tank, but can be directed directly through the toroidal tank.

In what follows, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not necessarily defined again for each figure. For the sake of clarity, only some of the same elements are provided with a reference sign. Shown is schematically in
- Figure 1: a perspective sectional view of a first embodiment of a toroidal tank according to the invention;
- Figure 2: a front sectional view of the installed toroidal tank;
- Figure 3: a perspective top view of the installed toroidal tank;
- Figure 4: a top view of the installed toroidal tank;
- Figure 5: a bottom view of the installed toroidal tank; and
- Figure 6: a sectional view of a second embodiment of a toroidal tank according to the invention.

Used terms such as upper and lower refer to the orientation of the toroidal tank and the vehicle shown in the figures.

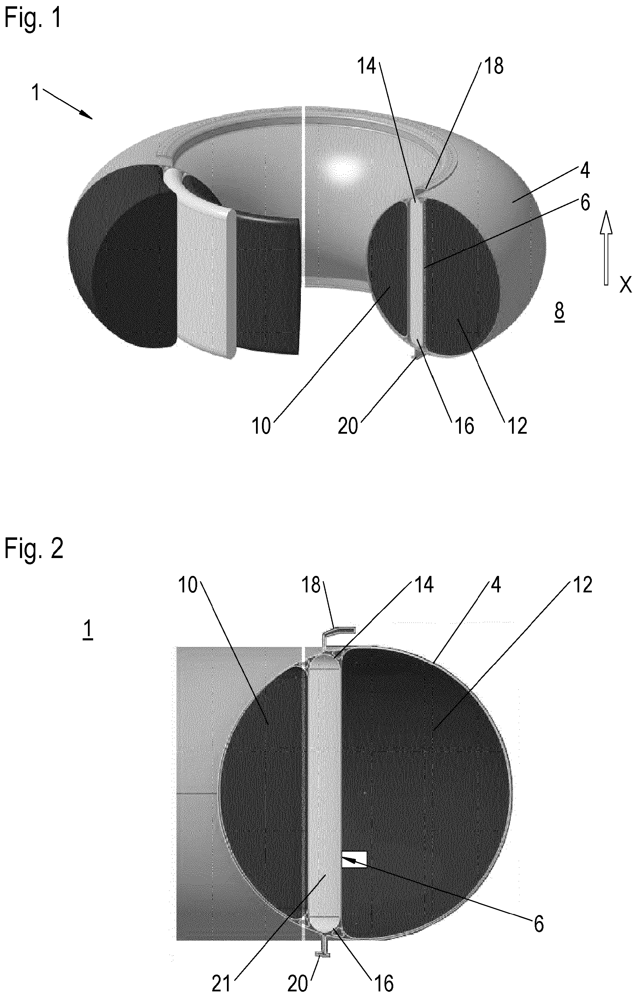

In Figures 1 and 2, a first embodiment of a toroidal tank 1 according to the invention shown. The toroidal tank 1 is adapted to be integrated in a primary structure of a vehicle, such a launcher stage of a spacecraft (see Figure 2).

The toroidal tank 1 has an outer wall (shell) 4 and an inner wall 6. The outer wall 4 delimits an interior of the tank 1 against an environment 8. The inner wall 6 separates the interior of the tank 1 in a radial inner compartment 10 for storing a fluid and in a radial outer compartment 12 for storing a fluid. The inner wall 6 is impermeable for the fluids and adapted to be a part of the primary structure of the vehicle 2.

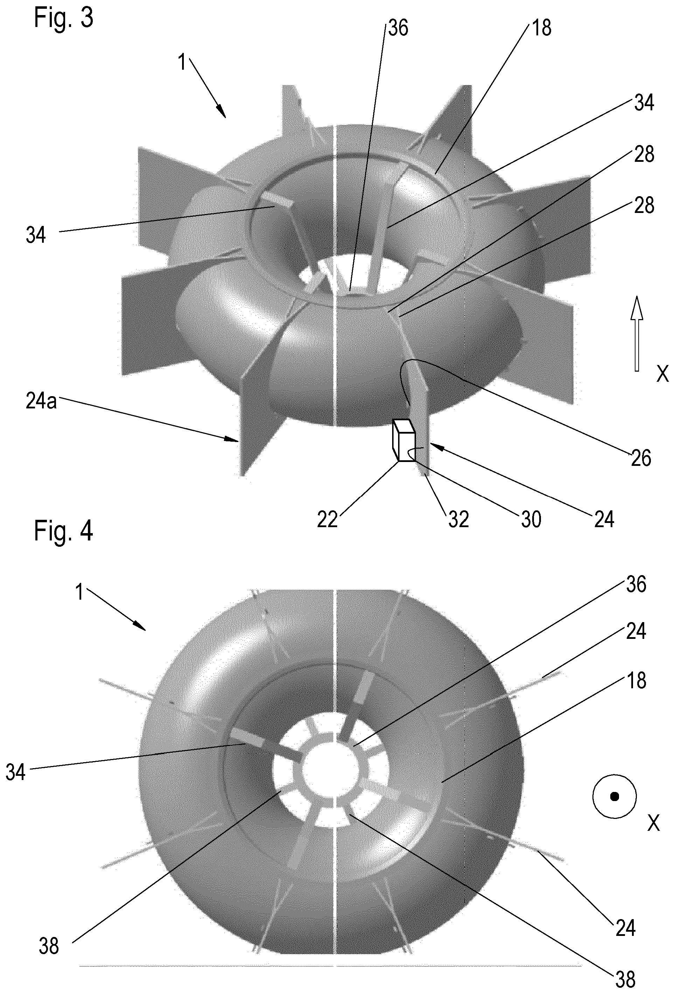

The inner wall 6 has a cylindrical shape and is coaxially orientated to an axial direction x of the toroidal tank 1. At their axial ends 14, 16 the inner wall 6 is attached to an upper area and to a lower area of the outer wall 4. Opposite to the axial ends 14, 16 of the inner wall 6, a upper adapter element 18 is attached to the upper area of the outer wall 4 and an lower adapter element 20 is attached to the upper area of the outer wall 4. The adapter elements 18, 20 have a ring-like shape and enable the attachment of the toroidal tank 1 in the primary structure. Here in the here shown embodiment, the upper adapter element 18 is provided to carry a payload (not shown) and the lower adapter element 20 is provided to attach the toroidal tank 1 to a launcher adapter (not shown). In other words, the inner wall 6 is rigidly attached to the adapter elements 18, 20 and thus acting as a part of the primary structure. By means of this, a load path runs through the toroidal tank 1 in axial direction x. Fluid lines of the toroidal tanks will be explained with reference to figure 3.

In addition, according to the first embodiment of the toroidal tank 1, the inner wall 6 is formed as a hollow wall providing an additional (third) fluid compartment 21. Thus, the toroidal tank 1 can store three fluids (propellants). The fluid compartment 21 of the inner wall 6 can be used for providing a pressurant gas, for instance.

In Figure 3, the toroidal tank 1 according to the invention ready to be installed in a vehicle such as a launcher stage is shown.

The toroidal tank 1 is aligned in axial direction x in the launcher stage. It is used to store the propellants to be used to run a main engine and thrusters. In order to position the thrusters and/or electrical components such as accumulators(batteries), computer units, solar panels, antennas, radiators, etc. as well as equipment 22 for logistical services such as a robotic manipulator, multiple first receiving elements 24 are provided.

The first receiving elements 24 extend radially outwards from the adapter elements 18, 20 to which they are connected. Here, the first receiving elements 24 are radial panels which are distributed in circumferential direction evenly and are orientated vertically. Their radial inner ends have a concave shape 36 in order to follow a convex contour of the outer wall (shell) 4 of the toroidal tank 1. The first receiving elements 24 can also be connected to the outer wall 4 in the area of its concave shape 36. In the shown embodiment, eight radial panels 24 are provided. Preferably, at least their upper radial inner ends are V-shaped with two fastening arms 28a, 28b, so that each radial panel 24 has two contact points with the upper adapter element 18.

The first receiving elements 24 carry the equipment in particularly on their sides 30, as exemplary shown in Figure 3, or at their free ends 32, for instance the solar panels and/or thrusters (not shown), or on their top, for instance the robotic manipulator (not shown).

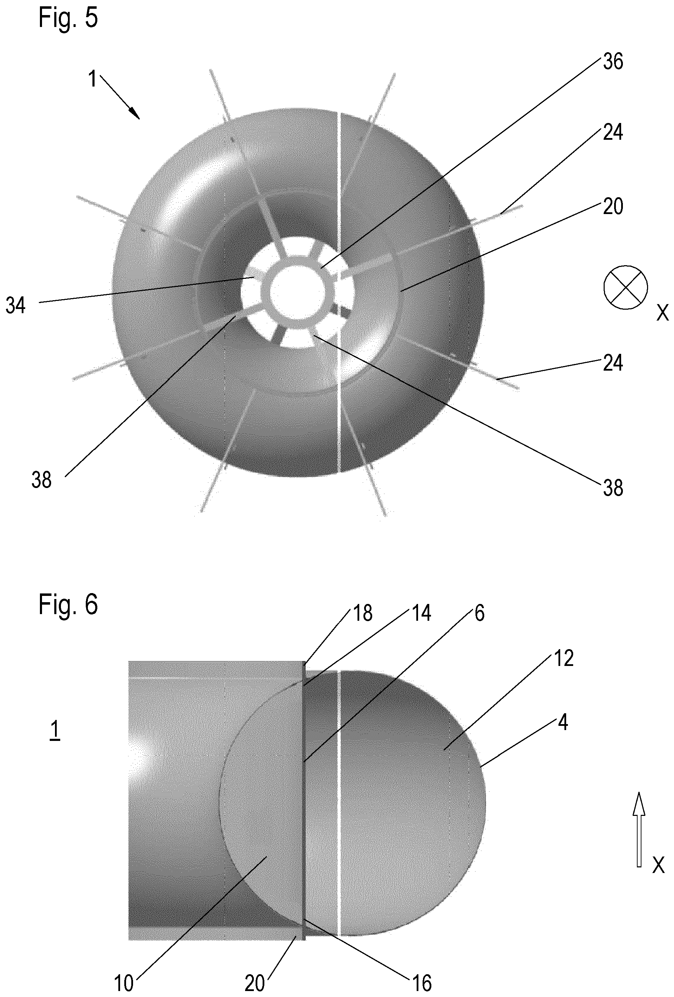

With reference to Figures 4 and 5, in addition to the first receiving elements (radial panels) 24, second receiving elements 34 are provided. The second receiving elements 34 extend radially inwards from the upper adapter elements 18. They are connected to the upper adapter element 18 and formed as angled arms extending in axial direction x downwards. At their lower ends, they are joined together, for instance via a ring 36. The ring 36 is attached to the lower adapter ring 20 via radial stiffening elements 38 such as struts or bars. Here, for struts 38 are provided which are evenly distributed over the ring 36.

The arms 34 are distributed evenly in circumferential direction. Here four arms 34 are provided. The arms 34 define a kind of central spare room in the middle of the toroidal tank 1. By means of the second receiving element 24, a kind of is of basket is created in the middle of the toroidal tank 1, which can also be used to carry the equipment 20 or to carry further equipment such as an additional tank.

At their lower ends, the main engine can be attached to, for instance (not shown).

In Figure 6, a sectional view of a second embodiment of the inventive toroidal tank 1 is shown. In contrast to the first embodiment, according to the second embodiment, the inner wall 6 is formed as a rigid cylindrical wall without any space inside. Thus, the inner wall 6 does not provide a third fluid compartment 21 shown in Figures 1 and 2. However, it is noted that the inner wall 6 of the second embodiment has the same load bearing function as the inner hollow wall 6 of the first embodiment, enabling an integration of the toroidal tank 1 in a primary structure of the launcher stage 2.

### Reference list

- 1: toroidal tank
- 4: outer wall
- 6: inner wall
- 8: environment
- 10: radial inner fluid compartment
- 12: radial outer fluid compartment
- 14: axial end of the inner wall
- 16: axial end of the inner wall
- 18: upper adapter element
- 20: lower adapter element
- 21: fluid compartment
- 22: equipment
- 24: first receiving element (radial panel)
- 26: concave shape
- 28: fastening arm
- 30: side of the first receiving element (radial panel)
- 32: free end
- 34: second receiving element (arm)
- 36: ring
- 38: stiffening element

- X: axial direction

## Claims

1. A toroidal tank (1) for a vehicle having a load bearing primary structure, comprising
• an outer wall (4) and
• at least one inner wall (6),
wherein
the outer wall (4) delimits an interior of the tank against an environment (8), and
the at least one inner wall (6) separates the interior of the tank (1) in
• at least one radial inner compartment (10) for receiving a fluid;
and in
• at least one radial outer compartment (12) for receiving a fluid;
wherein
the at least one inner wall (6) is adapted to be a part of the primary structure of the vehicle (2),
**characterized in that**
the at least inner wall (6) is a hollow body defining an internal compartment (21) adapted to receive a fluid.

2. The toroidal tank according to claim 1, wherein the at least one inner wall (6) is in mechanical connection with an upper adapter element (18) and with a lower adapter element (20) which are positioned outside on the outer wall (4).

3. The toroidal tank according to claim 2, wherein each adapter element (18, 20) has a ring-like shape and is in axial direction (x) aligned with the inner wall (6).

4. The toroidal tank according to any of the preceding claims, wherein first receiving elements (24) are provided which extend radially outwards from the adapter elements (18, 20) to which they are connected and which are adapted to receive equipment (20) of the vehicle.

5. The toroidal tank according to any of the preceding claims, wherein second receiving elements (34), are provided which extend radially inwards from at least one of the adapter elements (18, 20) to which they are connected and which are adapted to receive equipment (20) of the vehicle.

6. A vehicle such as a spacecraft or a launcher stage comprising a toroidal tank (1) according to any of the preceding claims, wherein at least the inner wall (6) separating the tank internally in
• at least one radial inner compartment (10) for receiving a fluid;
and in
• at least one radial outer compartment (12) for receiving a fluid;
is connected to a load bearing primary structure of the vehicle.

## Patentansprüche

1. Toroidaler Tank (1) für ein Fahrzeug, das eine tragende Primärstruktur aufweist, umfassend
• eine Außenwand (4), und
• mindestens eine Innenwand (6),
wobei
die Außenwand (4) einen Innenraum des Tanks gegenüber einer Umgebung (8) abgrenzt, und
die mindestens eine Innenwand (6) den Innenraum des Tanks (1) unterteilt in
• mindestens eine radiale Innenkammer (10) zur Aufnahme eines Fluids;
und in
• mindestens eine radiale Außenkammer (12) zur Aufnahme eines Fluids;
wobei
die mindestens eine Innenwand (6) so ausgelegt ist, dass sie ein Teil der Primärstruktur des Fahrzeugs (2) ist,
**dadurch gekennzeichnet, dass**
die mindestens eine Innenwand (6) ein Hohlkörper ist, der eine innenliegende Kammer (21) definiert, die dafür ausgelegt ist, ein Fluid aufzunehmen.

2. Toroidaler Tank nach Anspruch 1, wobei die mindestens eine Innenwand (6) in mechanischer Verbindung mit einem oberen Adapterelement (18) und mit einem unteren Adapterelement (20) steht, die außen an der Außenwand (4) positioniert sind.

3. Toroidaler Tank nach Anspruch 2, wobei jedes Adapterelement (18, 20) eine ringartige Form aufweist und in axialer Richtung (x) mit der Innenwand (6) ausgerichtet ist.

4. Toroidaler Tank nach einem der vorhergehenden Ansprüche, wobei erste Aufnahmeelemente (24) vorgesehen sind, die sich von den Adapterelementen (18, 20), mit denen sie verbunden sind, radial nach außen erstrecken, und die dafür ausgelegt sind, Ausrüstung (22) des Fahrzeugs aufzunehmen.

5. Toroidaler Tank nach einem der vorhergehenden Ansprüche, wobei zweite Aufnahmeelemente (34) vorgesehen sind, die sich von mindestens einem der Adapterelemente (18, 20), mit denen sie verbunden sind, radial nach innen erstrecken, und die dafür ausgelegt sind, Ausrüstung (22) des Fahrzeugs aufzunehmen.

6. Fahrzeug, wie ein Raumfahrzeug oder eine Trägerraketenstufe, das einen toroidalen Tank (1) nach einem der vorhergehenden Ansprüche umfasst, wobei zumindest die Innenwand (6), die den Tank innerlich unterteilt in
• mindestens eine radiale Innenkammer (10) zur Aufnahme eines Fluids;
und in
• mindestens eine radiale Außenkammer (12) zur Aufnahme eines Fluids;
mit einer tragenden Primärstruktur des Fahrzeugs verbunden ist.

## Revendications

1. Réservoir toroïdal (1) pour un véhicule ayant une structure principale de port de charge, comprenant
- une paroi extérieure (4) et
- au moins une paroi intérieure (6),
dans lequel
la paroi extérieure (4) délimite un intérieur du réservoir contre un environnement (8), et
l'au moins une paroi intérieure (6) sépare l'intérieur du réservoir (1) en
- au moins un compartiment intérieur radial (10) pour recevoir un fluide ;
et en
- au moins un compartiment extérieur radial (12) pour recevoir un fluide ;
dans lequel
l'au moins une paroi intérieure (6) est adaptée pour faire partie de la structure principale du véhicule (2),
**caractérisé en ce que**
l'au moins une paroi intérieure (6) est un corps creux définissant un compartiment interne (21) adapté pour recevoir un fluide.

2. Réservoir toroïdal selon la revendication 1, dans lequel l'au moins une paroi intérieure (6) est en connexion mécanique avec un élément adaptateur supérieur (18) et avec un élément adaptateur inférieur (20) qui sont positionnés à l'extérieur sur la paroi extérieure (4).

3. Réservoir toroïdal selon la revendication 2, dans lequel chaque élément adaptateur (18, 20) est en forme d'anneau et est aligné avec la paroi intérieure (6) dans la direction axiale (x).

4. Réservoir toroïdal selon l'une quelconque des revendications précédentes, dans lequel des premiers éléments de réception (24) sont prévus qui s'étendent radialement vers l'extérieur à partir des éléments adaptateurs (18, 20) auxquels ils sont raccordés et qui sont adaptés pour recevoir l'équipement (22) du véhicule.

5. Réservoir toroïdal selon l'une quelconque des revendications précédentes, dans lequel des seconds éléments de réception (34) sont prévus qui s'étendent radialement vers l'intérieur à partir d'au moins un des éléments adaptateurs (18, 20) auxquels ils sont raccordés et qui sont adaptés pour recevoir l'équipement (22) du véhicule.

6. Véhicule tel qu'un engin spatial ou étage de lancement comprenant un réservoir toroïdal (1) selon l'une quelconque des revendications précédentes, dans lequel au moins la paroi intérieure (6) séparant le réservoir à l'intérieur en
- au moins un compartiment intérieur radial (10) pour recevoir un fluide ;
et en
- au moins un compartiment extérieur radial (12) pour recevoir un fluide ;
est connectée à une structure principale de port de charge du véhicule.
